(19) **Europäisches Patentamt**
**European Patent Office**
**Office européen des brevets**

(11) **EP 2 709 139 A2**

(12) **EUROPEAN PATENT APPLICATION**

(43) Date of publication:
**19.03.2014 Bulletin 2014/12**

(51) Int Cl.:
**H01J 49/04** (2006.01)

(21) Application number: **13184108.2**

(22) Date of filing: **12.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.09.2012 GB 201216412**

(71) Applicant: **Shimadzu Corporation Kyoto 604-8511 (JP)**

(72) Inventors:
• **Bazhenov Alexander**
  **190121 St Petersburg (RU)**

• **Bulovich, Sergey Valer'evich**
  **195251 St Petersburg (RU)**
• **Giles, Roger**
  **Manchester,**
  **Greater Manchester M17 1GP (GB)**

(74) Representative: **Webster, Jeremy Mark et al**
  **Mewburn Ellis LLP**
  **33 Gutter Lane**
  **London**
  **EC2V 8AS (GB)**

(54) **Apparatus for providing gaseous sample ions/molecules and a corresponding method**

(57) An apparatus for providing gaseous sample ions/molecules from liquid droplets containing sample ions/molecules. The apparatus has a chamber having one or more walls which define an interior of the chamber, the chamber being configured to receive liquid droplets containing sample ions/molecules. The apparatus also has a gas flow producing means configured to produce a flow of gas within the chamber for promoting evaporation of liquid droplets in the chamber to provide gaseous sample ions/molecules. The apparatus is configured such that the flow of gas produced within the chamber inhibits liquid droplets in the chamber from coming into contact with the one or more walls of the chamber.

Figure 2

## Description

In general, this invention relates to an apparatus for providing gaseous sample ions/molecules from liquid droplets containing sample ions/molecules, and a corresponding method.

In general terms, the apparatuses and methods described herein may be seen as relating to enhancements in apparatuses and methods relating to mass spectrometry, and more preferably may be seen as relating to improvements in ion/molecule collection efficiency of ions/molecules generated in the atmospheric pressure region when the sample ions/molecules for analysis reside initially in the liquid phase.

A common source of such samples ions/molecules is a High Performance Liquid Chromotography Device ("HPLC"), which is commonly employed in the field of liquid chromatography mass spectrometry ("LCMS").

Mass spectrometers are widely employed for the determination of the molecular weight and structure of sample compounds. Example mass analysers for use in such mass spectrometers include the following types: quadrupole mass filter ("Q"), the ion cyclotron resonance ("ICR"), the time-of-flight ("TOF"), ion trap, and hybrid variants.

A large number of variant methods for the ionisation of sample compounds in the atmospheric pressure region exist. The present invention may relate, for example, to any apparatus/method where the sample compound to be submitted for mass spectrometry analysis for determination of molecular mass or composition or molecular structure, where the said sample for analysis resides in the liquid phase prior to ionisation in the gas phase or enters the liquid phase during the process of ionisation.

In recent years, a proliferation of ionisation methods have been devised. These ionisation methods can be considered two main categories: those methods that attempt to provide ions from a submitted continuous liquid flow, for example but not limited to ESI, APCI and APPI, and those methods that attempt to provide ions from a static liquid, or a static sample that enters into the liquid phase during the ionisation process. Well known methods in the second category are DESI (see e.g. Mass Spectrometry Sampling Under Ambient Conditions with Desorption Electrospray Ionization, Science, 2004, 306, 471-473) and API MALDI (see e.g. US5965884), however, in recent years there was a proliferation of similar and related methods, for a review see e.g. Ambient Ionization Mass Spectrometry, Annual Review of Analytical Chemistry, Vol. 3: 43-65, Volume publication date July 2010, First published online as a Review in Advance on February 5, 2010, DOI: 10.1146/annurev.anchem. 111808.073702.

Developing improvements in transport efficiency of gaseous ions at atmospheric pressure has been an important area of instrument development, and has high focus within the industry. The most widely used technique of atmospheric pressure ionisation ("API") is electrospray ionisation ("ESI"), which was first suggested by Dole et al. (M. Dole, L. L. Mack, R. L. Hines, R. C. Mobley, L. D. Ferguson, M. B. Alice, J. Chem. Phys. 49, 2240, 1968). In ESI, a sample (or "analyte") is usually dissolved in a liquid solvent and sample spray of aerosol is created from a fine capillary, by application of a high voltage and optionally a nebuliser gas. Typically the liquid flow issues from HPLC equipment, or other separation methods employed within the separation sciences.

The present invention, described below, may apply particularly to high flow rate HPLC, e.g. 300 to 1000 micro litres per minute.

With special reference to ESI, liquid droplets may be formed from a liquid jet issuing from the end of capillary by the application of a potential difference between a needle and a counter electrode, and usually by the provision of a high pressure gas issuing from a concentric capillary, typically referred to as nebuliser gas. The spray results in the formation of fine, charged liquid droplets which contain the sample ions or molecules. Once in the gas phase, the solvent evaporates leaving behind, gas phase sample ions or molecules. In prior art systems, the liquid flow rates typically employed within HPLC results in the production of many more solvent droplets than can be evaporated within the MS interface. For example, see US6700119 in which only a very small fraction of ions are collected from the periphery of the spray plume, and so accordingly only a very small fraction of the sample ions injected into the HPLC may enter the mass spectrometer for detection and identification. The introduction of a heated gas to the spray plume, arranged either as an intersecting flow or as a coaxial flow can assist in the evaporation of the droplets before entering the mass spectrometer inlet. However, in general, only a very small fraction of liquid droplets can be evaporated by this basic arrangement.

As far as is known to the inventors, this typical "plume sampling" scheme is adopted in various variants in all prior art LCMS instruments within the field of LCMS. The presence of the liquid droplets is problematic in that if they enter the mass spectrometer, the droplets can contaminate components of the mass spectrometer and/or contribute a detected noise signal reducing the sensitivity and effectiveness of the mass spectrometer (particularly when the spray plume is directed directly at the mass spectrometer's inlet). Contamination is a particular concern in certain applications of mass spectrometry, such as the clinical diagnostics market, where samples submitted for analysis, may be contained within blood plasma, whole blood or urine. The presence of these matrix materials can contaminate the ion source, and the mass spectrometer, and prevent its continued operation until an operator has cleaned it. This down time can be damaging to productivity and generally requires skilled and trained operators.

It is well known that ESI allows for the formation of a large range of ion masses, e.g. from less than 20 Da to ions as large as 1 MDa. It is also known as a "soft" ionisation technique, and thus has been a key technique for the analysis of biomolecules and has revolutionised mass spectrometry.

In addition to ESI, many other ion production methods can be used at atmospheric or elevated pressure. For example, MALDI, although originally developed as a high vacuum ionisation method, is now also routinely employed at atmospheric pressure (US5965884). Atmospheric pressure ion sources have a region wherein ions are produced, and one or more aperture or capillaries through which ions are transported or transferred into a first vacuum region, which is most usually differential pumped, that is a pump is employed to maintain the first region at a pressure greater than mass analyser region which typically operates in the pressure range $10^{-3}$ mbar to $10^{-10}$ mbar depending on the type of mass analyser.

When using an ESI source, ions are usually formed initially in a region at or close to atmospheric pressure within a "carrier" gas. In order for the gas phase ions to enter the low pressure region of the mass analyser, the ions must generally be sequentially separated from the carrier as they are transported from the atmospheric region and into the mass analyser. Depending upon the design of the ion source and interface, a proportion of ions may reside within solvent droplets, and may be carried into the intermediate vacuum region contained within solvent droplets.

There have been many attempts to improve ion collection of API.

For example, US6207955 describes the employment of a specially configured intersecting gas flow to assist droplet evaporation by imposing additional shear forces upon droplets.

As another example, US6177669 describes an API interface having vortex gas flow arranged to intersect the electrospray, as a means to separate larger drops within the spray from the smaller ones. It is said by those inventors that the vortex gas flow imparts a centrifugal force to the droplets and the largest droplets are driven into the outer walls of a containing tube and causing them to fragment into smaller drops by evaporation and collision with the chamber walls. The vortex gas flow appears to assist ion evaporation, by causing the spray to swirl, thus allowing more time for heat transfer from the hot gas to the droplets of the spray. However, the inventors would like to point out that this arrangement can lead to problems with contamination, as the spray interacts strongly with the wall of the chamber, and so in many applications will function for only a very short interval before blockage or malfunction.

A further development of API source technology is the introduction of vortex configurations as described within US6818888, in this case applied specifically to atmospheric pressure chemical ionisation (APCI). This patent is of interest from the view point that it teaches a method for transferring heat from a gas flow to a droplet stream, in this case to liberate neutral analyte molecules into the gas phase for subsequent ionisation by a corona discharge pin.

US7595487 discloses confining/focusing vortex flow transmission structures, mass spectrometry systems including a confining/focusing vortex flow transmission structure, methods of using the confining/focusing vortex flow transmission structure, methods of using mass spectrometry system, methods of transmitting droplets and ions, methods of evaporating droplets and desolvating ions, and the like.

US7145136 suggests methods to achieve an elongated flow path that is not necessary to be axis symmetrical or formed as a vortex.

Whilst the inventors have observed that a vortex structure of the gas flow appears to have been considered previously in relation to the problem of droplet evaporation within the API interface, the inventors have observed that in the case of the Varian (US6207955, US6177669 US6818888) and Fedorov (US7595487) patents described above, the probability of droplet evaporation is based on giving the trajectories of gas flow and droplets a spiral form. That is, the trajectory of the droplets is extended in proportion to the ratio of the tangential the axial flow velocity. The inventors have observed the following disadvantages of these prior art methods: large gas consumption, loss of large droplets on the chamber walls and incomplete processing of the spray plume.

The present invention has been devised in light of the above considerations.

A first aspect of the invention may provide an apparatus for providing gaseous sample ions/molecules from liquid droplets containing sample ions/molecules, the apparatus having:

a chamber having one or more walls which define an interior of the chamber, the chamber being configured to receive liquid droplets containing sample ions/molecules;

a gas flow producing means configured to produce a flow of gas within the chamber for promoting evaporation of liquid droplets in the chamber to provide gaseous sample ions/molecules;

wherein the apparatus is configured such that the flow of gas produced within the chamber inhibits liquid droplets in the chamber from coming into contact with the one or more walls of the chamber.

In this way, contamination of the one or more walls of the chamber by the liquid droplets (and any involatile material contained within the droplets) can be inhibited, which in turn can help the apparatus to operate without blockage/malfunction for a longer period of time.

For the avoidance of any doubt, the flow of gas may promote evaporation of liquid droplets in the chamber in any number of different ways.

For example, the gas flow producing means may be configured to produce a flow of heated gas within the chamber which promotes evaporation of liquid droplets in the chamber by transferring heat energy to the liquid droplets.

As another example, the flow of gas within the chamber may promote evaporation of liquid droplets in the chamber by subjecting the droplets to shear forces, preferably high shear forces.

As another example, the flow of gas within the chamber may promote evaporation of liquid droplets in the chamber by helping to extend a residence time of liquid droplets in the chamber. Here, evaporation of liquid droplets could be further promoted by use of an energy input device (see below for examples).

As would be appreciated by a skilled person, two or more of these processes may work in combination.

Preferably, the apparatus is configured such that the flow of gas produced within the chamber prevents substantially all of the liquid droplets from coming into contact with the one or more walls of the chamber.

Preferably, the apparatus is configured such that the flow of gas produced within the chamber has a vortex or swirling structure in at least a region of space within the chamber. For example, the chamber may have an axis around which the flow of gas swirls.

Herein, an "axis" of the chamber may be a central axis of the chamber, an axis of rotational symmetry of the chamber and/or an axis about which a wall or a portion of a wall of the chamber is rotatable, for example.

Preferably, the apparatus is configured such that the flow of gas provided within the chamber establishes a pressure gradient within the chamber. The pressure gradient established within the chamber may also be referred to as a "pressure profile" or "pressure distribution" herein.

Preferably, the pressure gradient established by the flow of gas includes a first region of space within the chamber that has a higher (e.g. static) pressure than a second region of space within the chamber, wherein the first region of space surrounds the second region of space in at least one dimension. Preferably, the second region of space is spaced apart from the one or more walls of the chamber. A flow of gas that establishes a pressure gradient having this structure has been found effective in inhibiting liquid droplets from coming into contact with the one or more walls of a chamber.

Without wanting to be bound by theory, it is thought that a flow of gas that establishes a pressure gradient having this structure is able to inhibit liquid droplets in the chamber from coming into contact with the one or more walls of the chamber by urging the liquid droplets in the chamber towards the second region of space.

This is advantageous, since the residence time of liquid droplets within the chamber can be extended, thereby helping to increase the proportion of liquid droplets which are evaporated.

Preferably, the first region of space surrounds the second region of space in three dimensions (rather than in just one or two dimensions), e.g. so that the liquid droplets are inhibited from coming into contact with the one or more walls of the chamber in three dimensions, rather than in just one or two dimensions.

Preferably, the pressure gradient established by the flow of gas confines liquid droplets in the chamber to a virtual chamber, the virtual chamber being a region of space within the chamber. The virtual chamber may correspond to the second region of space. For example, the virtual chamber may overlap with, be within, or be the same as the second region of space.

Preferably a majority of liquid droplets in the chamber are confined to the virtual chamber by the pressure gradient. More preferably, substantially all liquid droplets in the chamber are confined to the virtual chamber by the pressure gradient.

However, it is to be noted that it need not be the case that all liquid droplets (and any involatile material remaining after the evaporation of the liquid droplets) are confined to the virtual chamber by the pressure gradient at all times since, for example, if the chamber has a gas outlet configured to allow gas to exit the chamber, then some liquid droplets may (e.g. after a period of time spent in the second region of space) exit the chamber (and therefore the virtual chamber) via that outlet, along with any involatile material that is present.

It may be the case that any involatile material that is present is made to exit the chamber via the gas outlet. The gas trap may have a finite residence time, in which case there may be a statistical probability that some liquid droplets can survive in the chamber longer than the finite residence time.

Preferably, the apparatus evaporates a large proportion of, more preferably the majority of, more preferably substantially all, the liquid droplets received by the chamber.

The first region of space within the chamber can be viewed as providing a "barrier" which urges liquid droplets in the chamber towards the second region of space and/or the virtual chamber.

The pressure gradient provided by the flow of gas may be referred to as a "gas trap", due to its role in (preferably) confining liquid droplets to the virtual chamber.

In more general terms, the apparatus is preferably configured such that the flow of gas produced within the chamber provides a barrier which urges liquid droplets in the chamber towards, more preferably confines liquid droplets in the chamber to, a region of space within the chamber that is spaced apart from the one or more walls of the chamber. Preferably a majority of liquid droplets in the chamber are confined to the region of space by the barrier. More preferably, substantially all liquid droplets in the chamber are confined to the region of space by the barrier.

Here, the "barrier" is preferably provided by the pressure gradient established by the flow of gas (as described above) and the region of space towards which liquid droplets are urged (more preferably confined) by the barrier is preferably the "virtual chamber" described above.

Preferably, the flow of gas within the first region of space (or "barrier") defined above has a vortex or swirling structure, since this has been found to provide a particularly effective barrier to liquid droplets.

Preferably, the apparatus is configured such that the average residence time of a liquid droplet in the chamber (the time between a liquid droplet entering the chamber and exiting the chamber, assuming it is not evaporated) is longer than with prior art methods, e.g. 1 millisecond or more, 10 milliseconds or more, 50 milliseconds or more, 100 milliseconds or more, or 200 milliseconds or more. The residence time for a given apparatus is preferably measured directly, but could e.g. be measured via a simulation of the apparatus. Typically, the residence time of the liquid droplets may be 2 to 4 times the residence time of the gas, though in some specific cases the residence time of the droplets may be equal to that of the gas.

Preferably, the chamber has a gas inlet configured to allow gas to enter the chamber. The chamber may also have a gas outlet configured to allow gas to exit the chamber. The gas inlet and/or gas outlet can be viewed as being included in the gas flow producing means.

Preferably, the flow of gas within the chamber is such that at least part of the flow of gas reaching the gas outlet returns back towards the gas inlet.

Preferably the flow of gas within the chamber has an inner region and an outer region in which the flow of gas has an axial velocity in a "forward" direction, which may be a direction extending toward the gas outlet. The inner region may be close to an axis of the chamber. The outer region may be outside and/or extend around the inner region, and/or may be close to a side wall of the chamber. Preferably the flow of gas within the chamber also has an intermediate region, between the inner region and outer region, in which the flow of gas has an axial velocity in a "reverse" direction that is opposite to the "forward" direction, and which may be a direction extended from the gas outlet to the gas inlet. Here, "axial velocity" is intended to refer to velocity along an axis of the chamber.

A flow of gas having this structure has been found effective in inhibiting liquid droplets from coming into contact with the one or more walls of a chamber.

As would be appreciated by the skilled person, there are various ways in which the apparatus could be configured such that a flow of gas having the properties described above is produced in the chamber.

For example, configuring the apparatus to produce the flow of gas described above may involve configuring the gas inlet to guide gas to enter the chamber tangentially with respect to an axis of the chamber, which axis may be a central axis and/or an axis of rotational symmetry of the chamber.

For example, configuring the apparatus to produce the flow of gas described above may involve selecting a pressure drop between a gas inlet and a gas outlet, e.g. in a manner which takes account of the size and/or shape of the chamber.

For example, configuring the apparatus to produce the flow of gas described above may involve selecting a position of a gas inlet and/or gas outlet, e.g. in a manner that takes account of the size and/or shape of the chamber.

For example, configuring the apparatus to produce the flow of gas described above may involve using simulations, e.g. computational fluid dynamics ("CFD") simulations, to determine and/or optimise parameters, which parameters may include any one or more of the position of a gas inlet and/or gas outlet, dimensions of the chamber, a pressure drop between a gas inlet and a gas outlet, a direction in which gas enters the chamber.

Preferably, the chamber has a sample inlet, and the chamber is configured to receive liquid droplets containing sample ions/molecules at the sample inlet.

The sample inlet is preferably located at the same end of the chamber as a gas inlet of the chamber. The sample inlet is preferably located such that liquid droplets containing sample ions/molecule received by the chamber at the sample inlet are inhibited (preferably prevented) from coming into contact with the one or more wall of the chamber by the flow of gas. In practice, this may mean that the sample inlet is located on or close to a central axis of the chamber, or is not located too close to a side wall of the chamber.

Preferably, the chamber includes a sample outlet.

The sample outlet may be located in a number of different places and may include one or more openings.

For example, the sample outlet may include one or more openings located on a side wall of the chamber, which may be an outer wall of the chamber.

For example, the sample outlet may include one or more openings located on an inside wall of the chamber, the inside wall of the chamber being within an outer wall of the chamber.

Preferably, the apparatus includes one or more electrodes configured to produce an electric field within the chamber to direct gaseous sample ions (which may e.g. be liberated from the liquid droplets containing sample ions/molecules received by the chamber) towards the sample outlet so that the gaseous sample ions exit the chamber via the sample outlet.

As discussed in more detail below, the content of the liquid droplets (e.g. whether the liquid droplets contain sample ions or sample molecules) will in general be determined by the technique used to produce the liquid droplets. If the liquid droplets contain sample molecules (e.g. in addition to or instead of sample ions), then the apparatus preferably includes an ionisation device for ionising sample molecules liberated from the liquid droplets, e.g. so as to provide sample ions.

Also, it is to be noted that some sample molecules may become ionised during the droplet evaporation process. For example, if the liquid droplets have excess charge, e.g. excess hydrogen ions, and these hydrogen ions are taken up by the sample molecules upon liquid droplet evaporation, those sample molecules may become sample ions during the droplet evaporation process.

The ionisation device may, for example, include a corona discharge needle. In use, a high voltage may be applied to the corona discharge needle, which is preferably a sharp needle. A corona discharge needle is usually located to be within a spray plume. Accordingly, if present, a corona discharge needle may be placed within or close to the virtual chamber described above.

Preferably, the one or more electrodes are configured so that the direction of the electric field produced by the one or more electrodes is substantially orthogonal to (e.g. at an angle of from 70° to 110°, more preferably 80° to 100°, more preferably 85° to 95° with respect to) the flow of gas in at least a region of space (preferably the entire space) within the chamber. In this way, sample ions can be effectively moved by the electric field in the presence of the flow of gas, even if the flow of gas is moving with high velocity.

The at least a region of space in which the direction of the electric field produced by the one or more electrodes is substantially orthogonal to the flow of gas may, for example, include the first region of space discussed above (which, as noted above, may be described as providing a "barrier") and/or the virtual chamber.

For the avoidance of any doubt, the electric field may act over an extended section of the flow of gas or in a region local to a sample outlet.

The one or more walls of the chamber which define the interior of the chamber may include a side wall, which may e.g. be parallel to an axis of the chamber.

Preferably, the one or more walls of the chamber which define the interior of the chamber include a wall selected from, but not limited to, a cylindrical wall, a toroidal wall, a conical wall, a spiral wall, or a helical wall.

In this way, the invention may be extended to cylindrical, toroidal, conical, spiral or helical geometries, which geometries may be particularly effective for providing a gas flow which establishes a pressure gradient as described above. Although only the cylindrical wall is investigated in detail below, the same or similar principles apply to toroidal, conical, spiral and helical geometries. Other geometries are also possible.

Preferably, at least a portion of a wall of the chamber is configured to rotate about an axis of the chamber.

Preferably, the at least a portion of a wall of the chamber is configured to rotate about an axis of the chamber at an angular rotational speed that is less than $V_{sound}/2\pi R$, where $V_{sound}$ is the local speed of sound in the chamber, and R is an internal radius of the chamber

As explained below in more detail, having at least a portion of a wall of the chamber that is configured to rotate about an axis of the chamber has been found to help lower the gas consumption of the apparatus.

The at least a portion of a wall of the chamber (which, for the avoidance of any doubt, may be a complete wall or just part of a wall) may be configured to rotate around an axis of the chamber as a consequence of gas flowing out from the chamber. To this end, the at least one wall of the chamber that is configured to rotate may include one or more components for extracting energy from gas flowing out from the chamber, e.g. via a gas outlet. The components for extracting energy may, for example, be similar to turbine blades.

Alternatively or additionally, the at least a portion of a wall may be configured to rotate around an axis of the chamber with the assistance of an external energy source, e.g. a motor or compressor.

Preferably, the apparatus includes an energy input device configured to promote evaporation of the liquid droplets by supplying (directly or indirectly) energy to the liquid droplets.

By way of non-limiting example, the energy input device may include one or more devices selected from:

a heating device for heating gas which passes into the chamber via the gas inlet;
a heating device for heating the chamber;
a source of microwaves for supplying microwaves to the chamber; and/or
an acoustic device for supplying acoustic vibrations to the chamber.

Preferably, the gas flow producing means includes a gas supply.

The gas supply may be configured to produce a flow of purified nitrogen or purified air within the chamber, for example. Other gases may also be used.

By way of non-limiting example, the gas supply could include any one of the following:

a compressed gas cylinder;
a compressor (e.g. configured to produce a flow of purified/filtered air within the chamber) which is preferably oil free);
a nitrogen generator (e.g. configured to produce a flow of nitrogen within the chamber).

The gas supplies typically used for API typically include a compressed gas cylinder or a nitrogen generator.

Alternatively, instead of including a gas supply, the gas flow producing means could simply include a vacuum pump connected to a gas outlet port of the chamber, e.g. so as to provide a lower than atmospheric pressure (e.g. 500mbar) at the gas outlet port. In this way, a flow of gas within the chamber could be produced by gas at atmospheric pressure (e.g. from the atmosphere or from a gas supply) being pulled into a gas inlet of the chamber as a consequence of the lower pressure at the gas outlet port.

Typically the chamber would be configured to operate close to atmospheric pressure, but equally the chamber could be configured such that both inlet and outlet ports are above atmospheric pressure, or below atmospheric pressure.

For the avoidance of any doubt, an "inlet" or "outlet" described herein (e.g. a sample inlet, a sample outlet, a gas inlet, a gas outlet) may comprise more than one opening, and should not be construed as being limited to only one opening.

Preferably, the apparatus is configured so that the pressure at the gas inlet is greater than the pressure at the gas outlet, e.g. so as to produce the flow of gas within the chamber. This may be achieved, for example, by having a pump connected to the outlet port.

In some embodiments, the gas inlet and gas outlet may both be at, above or below atmospheric pressure.

Preferably, the apparatus is configured so that a region of space within the chamber has a turbulent viscosity ratio of 100 or more, 200 or more, 500 or more, or 1000 or more. Such a condition has been found to help promote evaporation of the liquid drops. The region of space having such a turbulent viscosity ratio may overlap, be within or otherwise correspond to the second region of space or virtual chamber described above.

Preferably, the gas supply (or heat input/energy supply) is configured to regulate the flow of gas within the chamber in response to one or more sensors, e.g. located in or at an outlet of the chamber. The one or more sensors may include, for example, a sensor that is configured to detect droplet density in the outflow, such as an aerosol particle counter.

Preferably, the apparatus includes a source of liquid droplets configured to produce liquid droplets containing sample ions/molecules to be received by the chamber.

Preferably, the source of liquid droplets is configured to produce liquid droplets containing sample ions/ molecules at (or near to) atmospheric pressure. The source of liquid droplets may produce the liquid droplets containing sample ions along with a carrier gas, as is known in the art.

Nonetheless, the source of liquid droplets may be configured to produce liquid droplets containing sample ions/molecules at, above or below atmospheric pressure

Preferably, the source of liquid droplets is configured to produce liquid droplets containing sample ions/ molecules in a spray, spray plume, or mist of liquid droplets.

Much of the discussion herein assumes liquid droplets are produced by an electrospray ionisation ("ESI") source. However, a skilled person would readily appreciate the apparatuses and methods disclosed herein would equally work with other sources of liquid droplets, so the invention should not be construed as being limited to ESI sources.

By way of non-limiting example, the source of liquid droplets may include any one of the following:

an electrospray ionisation ("ESI") source;
an atmospheric pressure chemical ionisation ("APCI") source;
an atmospheric pressure photoionisation ("APPI") source;
a desorption electrospray ionisation ("DESI") source;
an atmospheric pressure matrix-assisted laser desorption/ionisation ("API MALDI") source;
a thermospray ionisation source;
a source configured to use electro-flow focussing.

Here it is to be noted that some of these liquid droplet sources (e.g. ESI) belong to a category in which the produced liquid droplets generally contain sample ions, whereas others (e.g. APCI, APPI) belong to a category in which the produced liquid droplets generally contain sample molecules. For the avoidance of any doubt, the apparatus may include a liquid droplet source belonging to either of these categories, as would be appreciated by a person skilled in the art.

An ESI source may be preferred. For the avoidance of any doubt, an ESI source may include a plurality of ESI emitters.

Preferably, the apparatus includes at least one additional chamber configured to receive gaseous sample ions from the (original) chamber via a sample outlet in the (original) chamber. The at least one additional chamber may include ion focussing and/or transport means. The at least one additional chamber is preferably at a pressure that is lower than in the (original) chamber.

By way of non-limiting example, the ion focusing means and/or transport means included in the at least one additional chamber may include one or more electrodes for producing a static electrical field, one or more electrodes for producing radio frequency ("RF") electrical fields and/or gas flow focusing means.

The at least one additional chamber is preferably configured to have a pressure that is lower than that of the (original) chamber.

The apparatus may be included in a mass spectrometer which also has a mass analyser configured to analyse gaseous sample ions from the chamber.

By way of non-limiting example, the mass analyser may include any one of the following:

a quadrupole mass filter ("Q");
a triple quadrupole mass spectrometer;
an ion cyclotron resonance ("ICR") mass analyser;
a time of flight ("TOF") mass analyser;
one or more RF ions traps (e.g. "Paul traps");
one or more electrostatic ion traps;
hybrid variants of the above.

The at least one additional chamber (if present) may be a part of, or may connect the apparatus to, a mass analyser.

A second aspect of the invention may provide an apparatus according to the first aspect of the invention, wherein the gas flow producing means is omitted.

Accordingly, the second aspect of the invention may provide an apparatus for providing gaseous sample ions/molecules from liquid droplets containing sample ions/molecules, the apparatus having:

> a chamber having one or more walls which define an interior of the chamber, the chamber being configured to receive liquid droplets containing sample ions/molecules;
> wherein the apparatus is configured such that a flow of gas produced within the chamber inhibits liquid droplets in the chamber from coming into contact with the one or more walls of the chamber.

The apparatus in which the gas flow producing means is omitted may include any feature described above in connection with the first aspect of the invention, except that the gas flow producing means is omitted.

A third aspect of the invention may also provide a method corresponding to an apparatus according to the first aspect of the invention.

For example, the third aspect of the invention may provide a method of providing gaseous sample ions/molecules from liquid droplets containing sample ions/molecules, the method including:

> receiving liquid droplets containing sample ions/molecules in a chamber having one or more walls which define an interior of the chamber;
> producing a flow of gas within the chamber for promoting evaporation of liquid droplets in the chamber to provide gaseous sample ions/molecules;
> wherein the flow of gas produced within the chamber inhibits liquid droplets in the chamber from coming into contact with the one or more walls of the chamber.

The method may include any method step implementing or corresponding to any apparatus feature described in connection with any above aspect of the invention.

For example, the flow of gas produced within the chamber may prevent substantially all of the liquid droplets from coming into contact with the one or more walls of the chamber.

For example, the flow of gas produced within the chamber may have a vortex or swirling structure in at least a region of space within the chamber.

For example, the flow of gas produced within the chamber may establish a pressure gradient within the chamber, the pressure gradient established by the flow of gas including a first region of space within the chamber that has a higher pressure than a second region of space within the chamber, wherein the first region of space surrounds the second region of space in at least one dimension and the second region of space is spaced apart from the one or more walls of the chamber.

For example, the flow of gas within the chamber may have an inner region and an outer region in which the flow of gas has an axial velocity in a forward direction, as well as an intermediate region, between the inner region and outer region, in which the flow of gas has an axial velocity in a reverse direction that is opposite to the forward direction.

For example, the method may include evaporating substantially all the liquid droplets received by the chamber

For example, the flow of gas may be such that the average residence time of a liquid droplet in the chamber is 1 millisecond or more.

For example, the chamber may include a sample outlet and the method may include producing an electric field within the chamber to direct gaseous sample ions towards the sample outlet so that the gaseous sample ions exit the chamber via the sample outlet. The electric field may be substantially orthogonal to the flow of gas in at least a region of space within the chamber.

For example, the one or more walls of the chamber which define the interior of the chamber may include a wall selected from a cylindrical wall, a toroidal wall, a conical wall, a spiral wall, or a helical wall.

For example, the method may include rotating at least a portion of a wall of the chamber around an axis of the chamber, e.g. as a consequence of the gas flowing out from the chamber or with the assistance of an external energy source.

For example, the method may include promoting evaporation of the liquid droplets by supplying energy to the liquid droplets, e.g. using a heating device, a source of microwaves or an acoustic device.

For example, a region of space within the chamber may have a turbulent viscosity ratio of 100 or more.

For example, the method may include regulate the flow of gas within the chamber in response to one or more sensors, e.g. located in or at an outlet of the chamber

For example, the method may include producing liquid droplets containing sample ions/molecules to be received by the chamber, e.g. using a source of liquid droplets which may be as described above.

For example, the method may include receiving gaseous sample ions/molecules from the chamber in at least one additional chamber via a sample outlet in the chamber.

For example, the method may include analysing gaseous sample ions from the chamber, e.g. in a mass analyser.

When any apparatus feature is described herein as being "configured to" achieve some effect, this may be limited to times when the apparatus is in use, and the term "when the apparatus is in use" may be added accordingly.

The invention also includes any combination of the aspects and preferred features described except where such a combination is clearly impermissible or expressly avoided.

Examples of our proposals are discussed below, with reference to the accompanying drawings in which:

> Fig. 1 illustrates an apparatus 1 for providing gaseous sample ions/molecules from liquid droplets containing sample ions/molecules.

> Fig. 2 is a side view of a first chamber 120 for use in the apparatus 1 of Fig. 1.

> Fig. 3 is a side view of the first chamber 120 shown in Fig. 2 which illustrates a "virtual chamber" 132.

> Fig. 4 is a cross section of the first chamber 120 shown in Fig. 2, as taken through the line A-A in Fig. 2. Fig. 4 also shows a gas inlet 124 and a gas outlet 126 of the first chamber 120, even though these lie outside of the section through the line A-A.

> Fig. 5(a) illustrates simulated droplet trajectories within the first chamber 120 shown in Fig. 2.

> Fig. 5(b) illustrates simulated contours of turbulent viscosity ratio within the first chamber 120 shown in Fig. 2.

> Fig. 5(c) illustrates a simulated static pressure profile in the x-z plane for the first chamber 120 shown in Fig. 2.

> Fig. 6 is a schematic diagram illustrating the tangential velocity of gas within the first chamber 120 shown in Fig. 2.

> Fig. 7 is a side view of a second chamber 220 for use in the apparatus 1 of Fig. 1.

> Fig. 8 is a side view of a third chamber 320 for use in the apparatus 1 of Fig. 1.

> Fig. 9 is a side view of a fourth chamber 420 for use in the apparatus 1 of Fig. 1.

> Fig. 10 is a side view of a fifth chamber 520 for use in the apparatus 1 of Fig. 1.

> Fig. 11(a) is a 3D diagram illustrating a sixth chamber 620 for use in the apparatus 1 of Fig. 1.

> Fig. 11(b) is a plot showing the how the magnitude of tangential velocity varies with axial position along

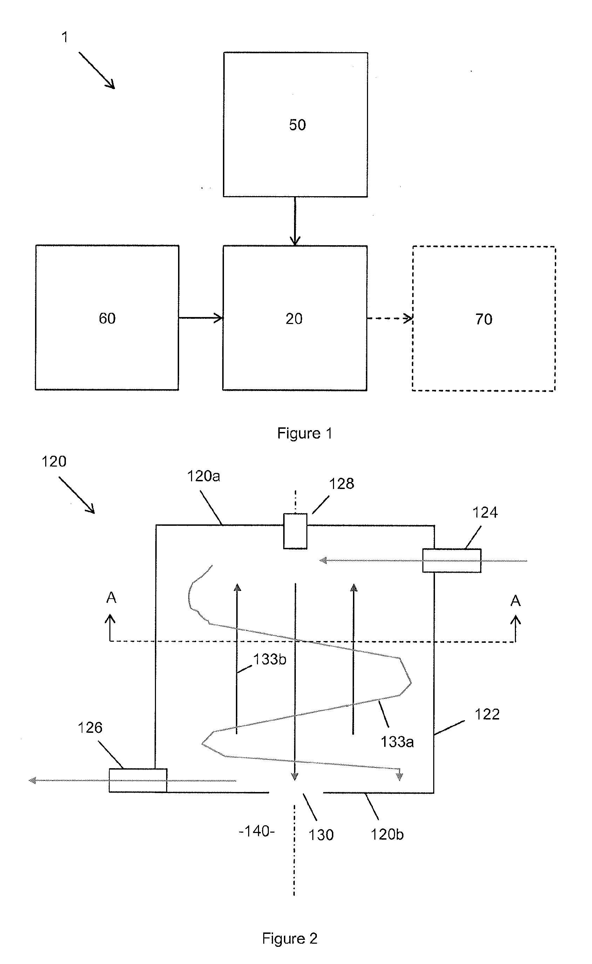

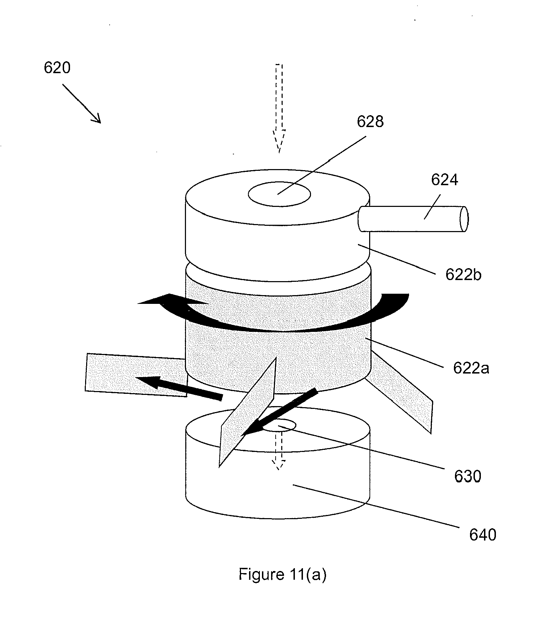

> the length for the first chamber 120 shown in Fig. 2 (dotted line) and for the sixth chamber 620 shown in Fig. 11(a) (solid line).

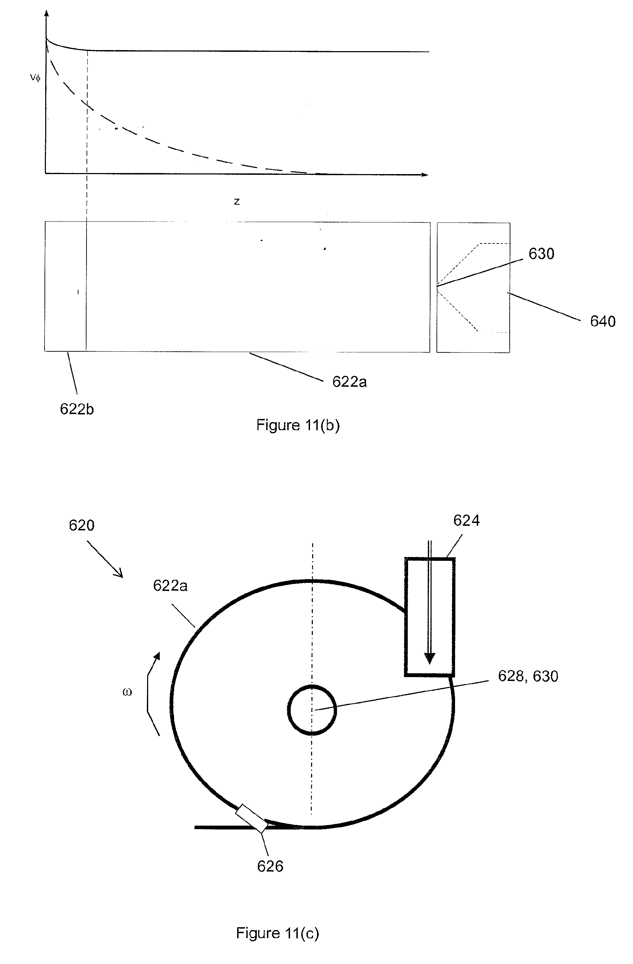

> Fig. 11(c) is a schematic diagram illustrating the sixth chamber 620 shown in Fig. 11(a).

In general, the following discussion describes examples of our proposals that relate to ion transport devices for use in mass spectrometry.

The present disclosure preferably relates to improved ion collection in atmospheric pressure ionisation ("API") for mass spectrometry applications, preferably to improve the efficiency of high flow electrospray, where the electrospray accepts the eluent from HPLC, as is commonly employed in the field of LCMS. All prior art systems known to the inventors have strongly divergent sprays consisting of micron sized droplets, and only a small fraction of the available ions are sampled by the mass spectrometer. The present disclosure preferably provides a means to capture the droplets formed from the LC eluent as a result of mixed electric and gas-dynamic destruction of the emergent liquid jet thereby extending the flow and confining the flow of the droplets of the spray, and means for separating and focusing ions thus liberated into the mass spectrometer inlet orifice.

The present disclosure may provide electrical focusing means for extracting ions from the gas flow and may result in a higher ion collection efficiency, and thus greater sensitivity and lower limits of detection than prior art devices. The present disclosure may additionally provide means to separate sample ions/molecules from involatile materials which may be present together with the sample or present in the solvent that would otherwise contaminate parts of the mass spectrometer.

In general terms, the apparatuses and methods disclosed herein may be distinguished from prior art developments in that:

> 1. The gas flow structure may be applied to atmospheric pressure ionisation ("API") methods, and can be employed in LCMS and other static or direct ionisation methods taking place at high pressure. There are the following advantages brought by these new features: the droplets to be evaporated may be captured within the gas flow structure so that they can't go to the walls of the chamber, losses can be reduced, involatile material can pass out of the chamber without contamination of internal surfaces, thus a robustness of the API interface can be achieved.

> 2. An electric field may be applied in a direction that is substantially orthogonal to a local gas flow or to a gas flow over an extended part of its flow, or to the gas flow in a large proportion or substantially all of the chamber. This arrangement is not, to the knowledge of the inventors described in the prior art, and may be effective to separate ions from the gas flow, and from any un-evaporated droplet, involatile materials originating in the sample for analysis, in the LC eluent, or in the sample matrix.

3. New mechanisms of droplet evaporation may be more effectively introduced. For example, microwave heating and ultrasonic vibrations may advantageously be applied to aid or assist in droplet evaporation. These methods offer the advantage of more efficient evaporation of droplets, which may lead to a reduction in power, as compared to heat transfer alone using a heated gas.

In general terms, the present disclosure may provide an environment having conditions for maximising the evaporation of droplets in order to continue to effectively liberate into the gas phase a maximum proportion of sample ions. Furthermore, a vapor pressure of the droplets is preferably kept substantially below equilibrium conditions, which may result in continuous droplet evaporation. These conditions are preferably conditions under which the balance between evaporation and condensation of matter from the surface of the droplets is shifted in the direction favorable to reduce droplet size. Generally, this is low pressure and high temperature of the ambient gas. Additional energy may be applied to the system to speed up the process of approaching equilibrium state and to liberate more sample ions and molecules from the liquid to gas phase. Furthermore, the longer the droplets are in the environment, the closer the state of the system droplet/vapor comes to equilibrium. Thus, it is preferable to create a structure of gas flow in the chamber to make the droplets reside in the chamber for an extended period of time, before passing into the exhaust and being pumped to waste.

In order to evaporate the liquid stream delivered at a flow-rate of 1 ml/min, which is a typical flow-rate, a certain power may be required to overcome the latent heat of evaporation of liquid droplets. The required power may be dependent upon the solvent composition, which may vary during the course of the LC analysis. Typically a power of approximately 100 Watts must be delivered to the spray plume to provide total evaporation. A problem associated with prior art systems in this respect is not a lack of power to be delivered into the heated gas stream, but is rather a lack of efficiency in transferring that power into the spray plume. In the apparatuses and methods disclosed herein, the spray plume is preferably captured over an extended region so as to provide a greater time for the energy transfer. Various methods for transferring energy from gas flow into droplets are taught herein. However, available energy from the gas flow alone may not be enough, and so additional energy in different forms may be introduced to the spray plume. Thus, the present disclosure also teaches the optional transferring of energy to droplets for example by heating of the gas flow, or by the addition of microwaves or by the addition of ultrasonic vibrations.

The present disclosure teaches a range of apparatuses and methods. In a simple configuration, an "ion enrichment" chamber may have a cylindrical form. Within this simple structure there are several embodiments that may be practically implemented. These embodiments may differ with respect to the relative location of the gas inlet and outlet ports, and the net flow direction. However, the chamber may equally have other forms, and the present invention is not restricted to cylindrical systems. For example suitable gas flow structures may equally be established in conical or toroidal forms. The latter is an example of a cyclic system: e.g. the droplets pass through the chamber one or more times, without reversing the main flow directions. More complex systems such as spirals can bring additional features and new advantages.

Fig. 1 illustrates an apparatus 1 for providing gaseous sample ions/molecules from liquid droplets containing sample ions/molecules.

The apparatus 1 preferably has a chamber 20 and a gas flow producing means 50.

The gas flow producing means 50 preferably includes a gas supply, which may include a compressed gas cylinder or a nitrogen generator, for example.

The apparatus 1 may also include a source of liquid droplets 60. The apparatus may also include a mass analyser 70 configured to analyse gaseous sample ions from the chamber 20, in which case the apparatus 1 may be viewed as a mass spectrometer.

The chamber 20 preferably has one or more walls which define an interior of the chamber 20. The chamber 20 is preferably configured to receive liquid droplets containing sample ions/molecules from the source of liquid droplets 60.

The gas flow producing means 50 is preferably configured to produce a flow of gas within the chamber 20 for promoting evaporation of liquid droplets in the chamber 20 to provide gaseous sample ions/molecules.

Preferably, the source of liquid droplets 60 is configured to produce liquid droplets containing sample ions/molecules, preferably at atmospheric pressure. The source of liquid droplets 60 may produce the liquid droplets containing sample ions along with a carrier gas, as is known in the art. Preferably, the source of liquid droplets 60 is configured to produce liquid droplets containing sample ions/molecules in a spray, spray plume, or mist of liquid droplets.

By way of non-limiting example, the source of liquid droplets 60 may include any one of the following:

an electrospray ionisation ("ESI") source;
an atmospheric pressure chemical ionisation ("APCI") source;
an atmospheric pressure photoionisation ("APPI") source;
a desorption electrospray ionisation ("DESI") source;
an atmospheric pressure matrix-assisted laser desorption/ionisation ("API MALDI") source;
a thermospray ionisation source;
a source configured to use electro-flow focussing.

By way of non-limiting example, the mass analyser 70 may include any one of the following:

a quadrupole mass filter ("Q");
a triple quadrupole mass spectrometer;
an ion cyclotron resonance ("ICR") mass analyser;
a time of flight ("TOF") mass analyser;
one or more RF ions traps (e.g. "Paul traps");
one or more electrostatic ion traps;
hybrid variants of the above.

Referring to Fig. 2, a first chamber 120 for use in the apparatus 1 of Fig. 1 preferably has one or more walls which define an interior of the first chamber 120, and which preferably include a cylindrical side wall 122. For reasons that will become apparent from the discussion below, the first chamber 120 may be referred to as an "ion enrichment chamber".

As shown in Fig. 2, the first chamber 120 preferably has a gas inlet 124 which is located at an inlet end 120a of the first chamber 120 and is configured to allow gas to enter into the chamber 120. The first chamber 120 preferably also has a gas outlet 126 which is located at an outlet end 120b of the first chamber 120 and is configured to allow gas to exit the chamber 120. The gas inlet 124 and gas outlet 126 can be viewed as being included in the gas flow producing means 50.

In use, the pressure at the gas inlet 124 is preferably greater than the pressure at the gas outlet 126, so as to produce the flow of gas within the first chamber 120.

The first chamber 120 also has a sample inlet 128, or "spray inlet", at which a spray of liquid droplets containing sample ions/molecules, e.g. at atmospheric pressure, may be received from the source of liquid droplets 60. The sample inlet 128 is preferably located at the inlet end 120a of the first chamber 120. The first chamber 120 may be operated at, below or above atmospheric pressure.

Each of the gas inlet 124, gas outlet 126, sample inlet 128 and sample outlet 130 (described below), may respectively take the form of one or more ports, holes, or slits or other opening, for example.

Referring back to Fig. 1, the apparatus 1 is preferably configured such that the flow of gas produced within the chamber 20 inhibits, preferably prevents substantially all, liquid droplets in the chamber from coming into contact with the one or more walls of the chamber 20, as will be explained in more detail below.

More preferably, the apparatus 1 is configured such that the flow of gas produced within the chamber establishes a pressure gradient (which may also be referred to as a "pressure profile") within the chamber. Preferably, the pressure gradient established by the flow of gas includes a first region of space within the chamber that has a higher (e.g. static) pressure than a second region of space within the chamber, wherein the first region of space surrounds the second region of space in at least one dimension, preferably three dimensions. Preferably, the second region of space is spaced apart from the one or more walls of the chamber.

Without wanting to be bound by theory, it is thought that a flow of gas that establishes a pressure gradient having this structure is able to inhibit liquid droplets in the first chamber 120 from coming into contact with the one or more walls of the first chamber 120 by urging the liquid droplets in the first chamber 120 towards the second region of space. This is advantageous, since the residence time of liquid droplets within the first chamber 120 can be extended, thereby helping to increase the proportion of liquid droplets which are evaporated.

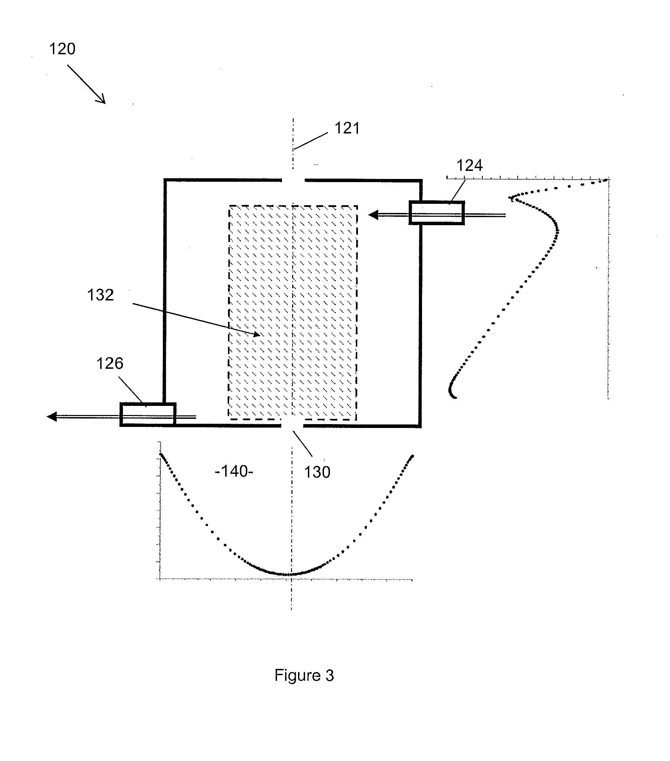

Preferably, the pressure gradient established by the flow of gas confines liquid droplets in the chamber to a virtual chamber 132, the virtual chamber 132 being a region of space within the first chamber 120 (see Fig. 3). The virtual chamber 132 may correspond to the second region of space. For example, the virtual chamber 132 may overlap with, be within, or be the same as the second region of space. Preferably a majority of liquid droplets in the first chamber 120 are confined to the virtual chamber 132 by the pressure gradient. More preferably, substantially all liquid droplets in the chamber are confined to the virtual chamber 132 by the pressure gradient.

The first region of space within the chamber can be viewed as providing a "barrier" which urges liquid droplets in the chamber towards the second region of space and/or the virtual chamber 132.

The pressure gradient established by the flow of gas may be referred to as a "gas trap", due to its role in (preferably) confining liquid droplets to the virtual chamber 132. The "gas trap" preferably has gas-dynamic flow properties which provide relatively slow transport of liquid droplets through the chamber whilst preventing substantially all of the liquid droplets from coming into contact with the one or more walls of the chamber.

The apparatus 1 may include an additional chamber 140 configured to receive gaseous sample ions/molecules from the first chamber 120 via a sample outlet 130 in the first chamber 120. For the first chamber 120, the sample outlet 130 is located substantially on the axis of the first chamber 120, at the output end 120b of the first chamber 120.

Referring back to Fig. 2, the gas inlet 124 is preferably configured to guide gas from the gas flow producing means 50 to enter the first chamber 120 tangentially with respect to an axis 121 of the first chamber 120.

Preferably, the pressure of the gas at the gas inlet 124 is relatively high compare to the (average) pressure within the first ("ion enrichment") chamber 120, and the (average) pressure in the additional chamber 140 is preferably lower than the pressure in the first chamber 120.

Preferably, the apparatus 1 is configured such that the flow of gas produced within the chamber has a vortex or swirling structure in at least a region of space within the first chamber 120, which region of space may correspond to the first region of space described above. Thus, the flow of gas entering at gas inlet 124 may swirl around, i.e. makes a rotational movement about, the axis of first chamber 120 while moving along the axis towards the outlet end 120b. Here, the greatest velocity of the gas is preferably situated at the periphery of the first chamber 120. The majority of this gas flow will generally exit the first chamber 120 via the gas outlet 126, although not necessarily directly. A relatively small proportion of the gas may exit the first chamber 120 via the sample outlet 130, so as to be received by the additional chamber 140.

As noted above, a spray plume, containing sample ions is preferably received by the first chamber 120 through the spray inlet 130, which for the first chamber 120 is located substantially on the axis of the first chamber 120, at the input end 120a of the first chamber 120.

At certain values of the geometric and physical parameters, the flow of gas within the first chamber 120 preferably has a structure such that at least part of the gas flow on reaching the outlet end 120b returns back towards its inlet end 120a, yet still maintains a strong swirling, i,e, rotational, flow path. For the avoidance of any doubt, the locations of the gas inlet 124, gas outlet 126, sample inlet 128 and sample outlet 130 are not limited to the locations shown in Fig. 2, since e.g. optimisation of the apparatus may cause these locations to be altered.

We note that the gas dynamic structure described above is similar in concept to that in a Ranque-Hilsch tube, which is used in a range of engineering applications. These applications include, but are not limited to vortex coolers, vortex conditioners, vortex thermostats, swirl burners (including pyrophoric, that is, with the stabilisation of the flame front), heat pumps on the basis of vortex tubes [Ranque, G.J. Experiments on expansion in a vortex with simultaneous exhaust of hot air and cold air. Le Journal de Physique et Le Radium, 4(7) pp 112-115, 1933. Hilsch, R. The use of expansion of gases in a centrifugal field as cooling process. The Review of Scientific Instruments, 18(2) pp 108-113, 1947 A. Gutsol. The Ranque effect. Physics-Uspekhi, 40(6):639-658, 1997. L. Khodorkov, N.V. Poshernev, and M.A. Zhidkov. The vortex tube-a universal device for heating, cooling, cleaning, and drying gases and separating gas mixtures. Chemical and Petroleum Engineering, 39(7-8):409-415, July 2003]. However, to the inventors knowledge, a gas flow having this type of structure has not previously been considered for confining liquid droplets containing sample ions/molecules.

Without wishing to be bound by theory, the inventors believe that liquid droplets below a certain diameter, ~ 10um, will 'faithfully' follow the tangential gas flow in the first chamber 120. Thus, if the sample ions/molecules (e.g. in the form of a spray) are introduced at a certain radius, then the liquid droplets will, it is thought, remain at that radius, in which case outward diffusion will not be experienced. When injecting the spray on the axis, the inventors believe that the droplets will, in general terms, spread out to a certain radius, to where the gas flow is sufficiently high, and no further. Thus, according to this current understanding, the location of the sample inlet 128 is an important factor, since if the sample inlet 128 is too close to the perimeter of the first chamber 120, then the liquid droplets will go to the chamber walls.

Without wishing to be bound by theory, it is believed that a consequence of the established gas flow structure is that, in effect a (relatively high pressure) gas "curtain" is formed, which effectively provides a barrier which confines substantially all of the liquid droplets of the spray plume within the virtual chamber 132 discussed above. Here, reference is made to Fig. 3 which shows the virtual chamber 132 as having a generally cylindrical shape.

The graphs shown on Fig. 3 illustrate the axial and radial pressure gradients which define the "gas trap". Note here that in both the axial and radial dimensions, a first region of space which surrounds a second region of space has a higher pressure than the second region of space. Note also that this second region of space corresponds to the virtual chamber 132.

Without wishing to be bound by theory, it is believed that the increased pressure in the first region of space at the periphery of the first chamber 120 helps to prevent the liquid droplets from moving to the outer side wall 122 of the first chamber 120.

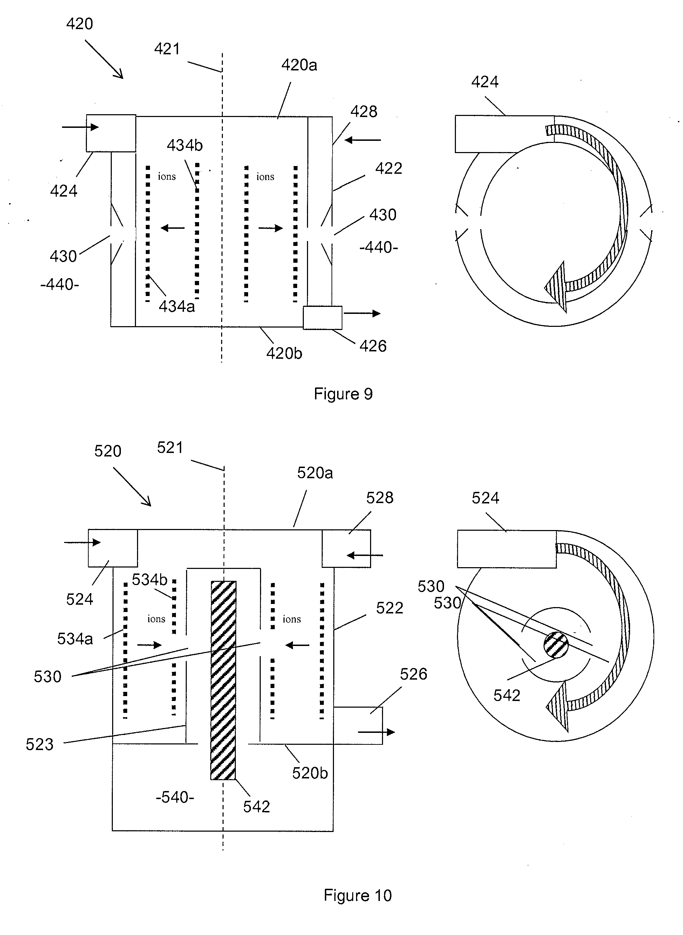

Without wishing to be bound by theory, it is believed that the liquid droplets are inhibited from moving to the axis of the first chamber 120, not as a result of increased pressure there, but rather due to velocity imparted to them by the flow of gas. If the liquid droplets lose their velocity, they could nonetheless go to the central axis. The presence of a body in the centre of the chamber (e.g. as present in the fifth chamber 520 discussed below with reference to Fig. 10) does not change the situation significantly, since liquid droplets and any involatile material present are inhibited from going to the axis due to their centrifugal force.

The forward "normal" flow of the gas within the first chamber 120 is shown by the arrow labeled 133a in Fig. 2. Liquid droplets injected through the sample inlet 128 acquire relatively slow forward motion towards the outlet end 120b of the first chamber 120, while rotating around its axis of symmetry. When the liquid droplets reach the exit end of the chamber, a proportion of droplets are preferably returned by a reverse gas flow, the general direction of which is shown by the arrows labeled 133b in Fig. 2.

Without wishing to be bound by theory, it is believed that, advantageously, the liquid droplets carried in the rotating reverse flow are kept away from of the walls of the first chamber 120 due to the established pressure gradients in the first chamber 120, which as noted above are believed to effectively provide a barrier which confines substantially all of the liquid droplets of the spray plume within the virtual chamber 132. Note that the flow path of liquid droplets is not necessarily symmetric around the axis of the first chamber 120.

Preferably, the apparatus 1 evaporates a large proportion of, more preferably the majority of, more preferably substantially all, the liquid droplets received by the first chamber 120. However, not necessarily all liquid droplets are evaporated by the apparatus 1. The majority of any un-evaporated liquid droplets (and/or involatile material previously contained in droplets that have been evaporated) may therefore exit the chamber after some residence time in the virtual chamber 132 through the gas outlet 126.

An advantage of the gas flow structure within the first chamber 120 described above is that a spray plume of liquid droplets may efficiently enter into the first chamber 120 even if the plume did not initially have a velocity component parallel to the axis of the first chamber 120.

A further advantage of the gas flow structure within the first chamber 120 described above is that the droplets have a long path. The droplet trajectories have the complicated shape and thus long residence time. The residence time is typically within the region from some milliseconds to tens of milliseconds, in some cases even up to a few hundred milliseconds, and may be maintained within a virtual chamber 132 at the central part of the first chamber 120.

Preferably, the virtual chamber 132 is spaced apart from the walls of the first chamber 120, and therefore does not extend to the sample outlet 130. Rather, it is preferred for sample ions to be moved out of the gas flow in the vicinity of the sample outlet 130 by an applied electrical field, e.g. in a manner that will now be described.

Preferably, the apparatus 1 includes one or more electrodes (not shown in Fig. 2) configured to produce an electric field within the first chamber 120 to direct the gaseous sample ions out of the first chamber 120 via the sample outlet 130. Note that if the liquid droplets contain sample molecules (rather than sample ions), then the apparatus 1 may include an ionisation device (not shown) for ionising the sample molecules after the liquid droplets have been evaporated so as to provide the sample ions to be directed out of the first chamber 120 by the electrical field produced by the one or more electrodes. The ionisation device may for example include a corona source, or a UV lamp or a UV laser.

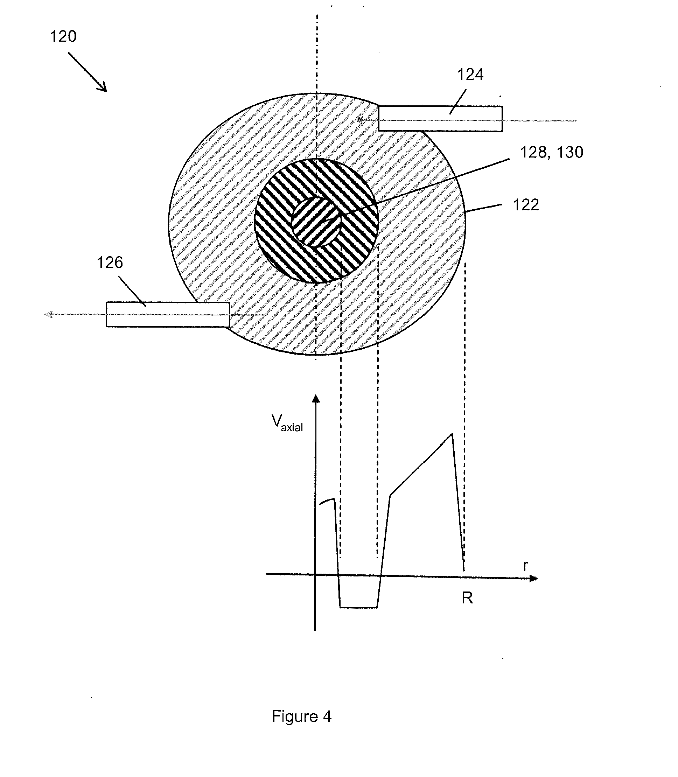

The inset graph in Fig. 4 illustrates a possible axial velocity of the flow of gas ($V_{axial}$) within the first chamber 120. As can be seen from Fig. 4, in an inner region close to the axis and an outer region at the periphery, i.e. close to the side wall 122, of the first chamber 120, the flow of gas has an axial velocity in the forward direction. In an intermediate region between the inner and outer regions, the flow of gas has an axial velocity in the reverse direction.

Without wishing to be bound by theory, it is believed that the inner region of the chamber functions, in effect, similar to a carburetor, in which liquid droplets are radially trapped. This central part, which corresponds to the virtual chamber 132 described above, has a high value of turbulent viscosity ratio (a measure of turbulence), and thus provides strong 'mixing'. These conditions help to promote high effective diffusion and impose high shear forces on the trapped droplets, thereby promoting and accelerating the process of liquid droplet evaporation.

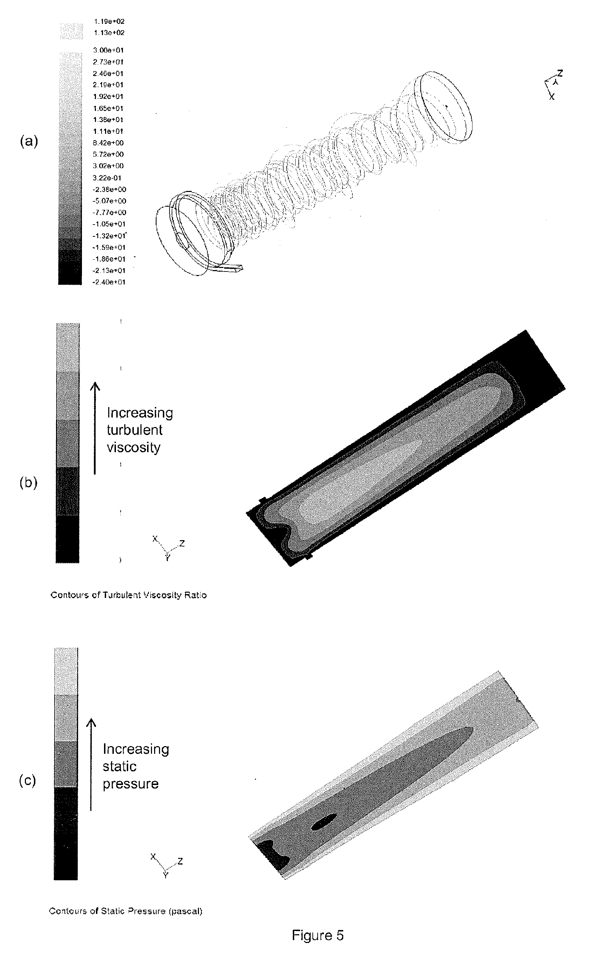

The parameters of the simulations whose results are depicted in Fig. 5(a)-(c) were as follows: the chamber was of cylindrical form as represented in Fig. 2, and had a length of 80 mm, a diameter of 20 mm, and a nominal pressure of 1 Bar. The sample inlet 128 was a port 5mm in diameter and located on the axis of the chamber. The gas inlet 124 was a port having a rectangular cross section (1 mm by 2 mm) and was connected to a gas supply providing gas at a pressure of 2Bar and configured to introduce the gas tangentially into the chamber via the gas inlet 124. The gas outlet 126 was a radial slot 2 mm in width. The sample outlet 130 was a port 0.5 mm in diameter, and the pressure outside the sample outlet 130 (i.e. in the additional chamber 140) was 0.1 Bar. For these parameters, the gas flow through the chamber was 2.6 m3/Hr, and the tangential gas velocity into the chamber was 250 m/s. This gave rise to 9 turns of the gas in the forward direction and 50 turns of the returning gas, with the (average) time of the propagation of the gas bering ~100 ms. The kinetic energy of the gas was reduced from 100 W at the gas inlet 124 to 45 W at the gas outlet 126. The turbulent viscosity ratio reached 2400. The action of the gas trap may also be understood from the static pressure field, which is plotted in Fig. 5(c), which shows that the pressure is 70 mbar higher at the chamber periphery than on the axis. Without wishing to be bound by theory, it is believed that the action of the pressure difference is to inhibit, more preferably prevent, liquid droplets from contacting the external chamber walls, whereas the tangential gas flow helps to prevent droplets from going to the axis of the chamber.

In Figs. 5(a)-(c), the first chamber 120 is depicted with the inlet end 120a on the left and the outlet end 120b on the right.

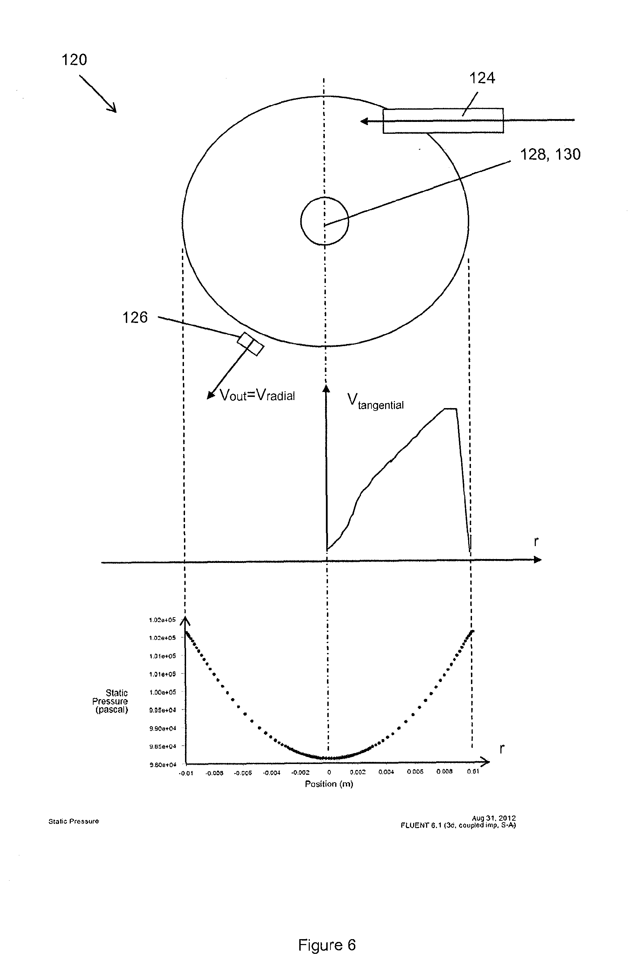

Referring now to the upper graph shown in Fig. 6, the tangential ("swirling") velocity of the gas ($v_\phi$) is high near the wall. In the inner region of the chamber, the tangential velocity of the gas has lower magnitude. The relationship between pressure and the tangential velocity component may be given as:

$$\frac{\partial p}{\partial r} = \rho \, \frac{v_\varphi^2}{r}$$

Where:

p = static pressure (pressure experienced without consideration of movement of gas)

r = radius

$\rho$ = density

$v_\phi$ = tangential velocity of the gas.

Referring now to the upper graph shown in Fig. 6, the dependence of static pressure on radial position is shown. The tangential velocity dependence shown in the upper graph of Fig. 6 may be obtained from this static pressure dependence.

In use, liquid droplets can be seen as being trapped within the "gas trap" and during this time they progressively evaporate, leaving solvent vapor, molecular sample ions and neutral sample molecules, and other involatile materials, which may also be contained by the gas trap. Sample ions carried to the vicinity of the of the sample outlet 130 may be effectively removed from the gas trap by a suitably applied electrical field, e.g. produced in the manner described above, the electrical field preferably being effective to move ions in a desired direction against the slow axial gas flow (typically a few ms$^{-1}$ or lower), and towards the sample outlet 130. Here it should be noted that the applied electrical field means will in general be ineffective to influence any droplets, due to their very low mobility, and will in general also be ineffective to move any neutral analyte sample molecules (due to their lack of charge). Thus, the electrical field is preferably effective to preferentially select sample ions from the droplets and other species confined by the "gas trap". Thus the first chamber 120 can be viewed as an "ion enrichment" chamber since it preferably provides the processing of the majority of, preferably substantially all, liquid droplets emitted from the source of liquid droplets, rather than a very small fraction as in the prior art methods.

A preferred feature of the first chamber 120 is that the electrical field is substantially orthogonal to the local flow of gas in at least a region of space within the chamber, and furthermore preferably acts over an extended part of the flow of gas. Preferably, there are several complete rotations of the gas flow as it is reflected from the inlet end 120a and outlet end 120b of the first chamber 120. This helps to provide adequate time for sample ions to be extracted from the flow by the orthogonally orientated electrical field. Thus, the electrical field is preferably effective to preferentially remove ions from the gas flow, and focus them towards the sample outlet 130. Here it is to be noted that the high tangential velocity of the gas flow does not unduly influence the focusing of ions towards the sample outlet 130, because the electrical field is substantially orthogonal to the high tangential gas flow.

In other embodiments described below, the electrical field may extend substantially throughout the entire chamber. With reference to first chamber 120, ions may be moved by the electrical field against or with the slow axial gas flow, from the inlet end 120a of the first chamber 120 to the outlet end 120b.

For some methods of droplet production, an additional ionisation device may be advantageously located within the chamber. Such ionisation devices may for example be a corona source, or a UV lamp or a UV laser.

Preferably, the apparatus 1 includes an energy input device (not shown) configured to promote evaporation of the liquid droplets by supplying (directly or indirectly) energy to the liquid droplets.

The energy input device may include one or more devices selected from:

a heating device for heating gas which passes into the chamber via the gas inlet;
a heating device for heating the chamber;
a source of microwaves for supplying microwaves to the chamber; and/or
an acoustic device for supplying acoustic vibrations to the chamber.

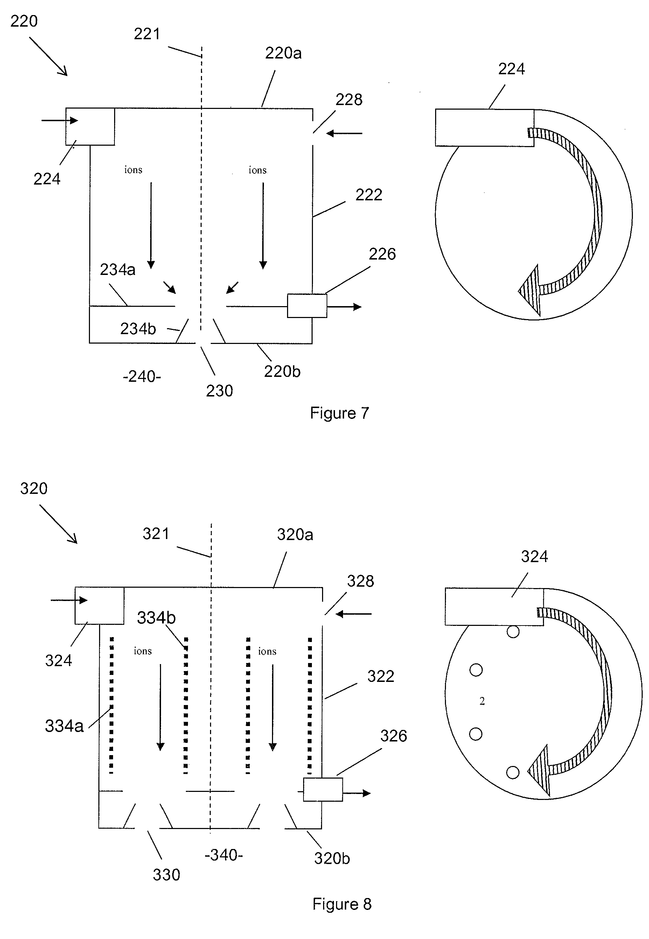

As would be appreciated by the skilled person in view of the discussion above, numerous alternative chamber geometries and electrode arrangements could be used, several of which will now be described with reference to Fig. 7, Fig. 8, Fig. 9 and Fig. 10. The chambers shown in these figures include many of the same features as the first chamber 120. Alike features have been given corresponding reference numbers and need not be described further herein.

With reference to the second chamber 220 shown in Fig. 7, electrodes configured to produce an electric field within the second chamber 220 include a focusing plate 234a and an exit skimmer 234b. In use, an electric field is produced between the focusing plate 234a and the exit skimmer 234b, thus sample ions are focused through the exit skimmer 234 and into the additional chamber 240 that is held at a lower pressure than the second chamber 220 and may contain ion focusing and transport means.

With reference to the third chamber 320 shown in Fig. 8, electrodes configured to produce an electric field within the third chamber 320 include a plurality of electrodes 340a formed in or close to the walls of the third chamber 320 and optionally include a plurality of electrodes 334b formed within a central region of the ion enrichment chamber. The electric field produced by the electrodes 334a, and optionally the electrodes 334b, is preferably an axial field effective to move sample ions parallel to the axis of the ion enrichment chamber and thus towards the sample outlet 330, which may take the form of one or more exit ports, located in the outlet end 330a of the third chamber 320.

With reference to the fourth chamber 420 shown in Fig. 9 electrodes configured to produce an electric field within the fourth chamber 420 include electrodes 434a and 434b. In use, an electrical field is produced by these electrodes to move ions towards a sample outlet 430, which may take the form of one or more apertures or slits located in the outside wall of the fourth chamber 420, the sample outlet 430 allows ions to exit into the additional chamber 440 maintained at a pressure lower than the fourth chamber 420.

With reference to the fifth chamber 520 shown in Fig. 10 electrodes configured to produce an electric field within the fifth chamber 520 include electrodes 534a and 540b. In use, an electrical field is produced by these electrodes to move ions towards a sample outlet 530, which may take the form of one or more apertures or slits located in an inside wall 523 of the fifth chamber 520, which sample outlet 530 allows ions to exit into the additional chamber 540 maintained at a pressure lower than the fifth chamber 520. The electrodes 534b positioned nearer the axis of the fifth chamber 520 define an aperture which allows ions to exit through the sample outlet 530. The additional chamber 540 includes an RF ion guide 542 for guiding ions to a lower compartment 540a within the additional chamber 540.

Here it may be noted that the third, fourth and fifth chambers 320, 420, 520 are intended to provide greater charge throughput due to the distributed or extended nature of their ion exit ports 330,430, 530. Thus, these chambers may provide the capability to accept higher concentrations of sample ions/molecules than is possible with the second chamber 220.

In all cases, the electrodes are preferably placed such that the droplets and particles are substantially prevented from contacting the surfaces of the electrodes and especially the associated insulators. That is, the electrodes are preferably located outside the virtual chamber. This is an important feature, because insulators that come into contact with solvent vapor will, in general, no longer be able to sustain a desired voltage, thus inhibiting them from directing ions towards the sample outlet.

Further, in all cases, the electrodes are preferably substantially transparent to the gas flow within the chamber, or else formed within the walls of the chamber

The chambers described above will in general have a high gas load, that is, they will have a high throughput of gas.

A sixth chamber 620 may be considered as shown in Fig. 11(a). The sixth chamber 620 is similar in many respects to the first chamber 120 shown in Fig. 2. Alike features have been given corresponding reference numbers and need not be described further herein.

The function of the sixth chamber 620 is essentially the same as for the first chamber 120, in that it is desirable to create a structure of gas-dynamic flow within the chamber which provides for a relatively slow transport of droplets from the sample inlet 628 to the sample outlet 630 along the axis of the chamber (preferably at least 1 ms, and preferably within 10-100 ms), and again preferably does not allow the droplets to make contract with the chamber walls.

However, the sixth chamber 620 differs from the first chamber 120 in that a portion 622a of the cylindrical side wall 622 is configured to rotatable about an axis of the sixth chamber 620. Another portion 622b of the cylindrical side wall 622 is non-rotatable. Preferably, the rotatable portion 622a of the cylindrical side wall 622 of the sixth chamber 620 includes one or more (preferably a plurality of) micro turbines or blades for extracting energy from gas flowing out from the chamber, so that the rotatable side wall portion 622a rotates as a consequence of the gas flow within the sixth chamber 620. The additional chamber 640 shown in Fig. 11(a) is preferably non-rotatable.

The dashed arrows in Fig. 11(a) show liquid droplets entering the sixth chamber 620, e.g. as an ESI spray, and also show gaseous sample ions exiting the sixth chamber 620 via sample outlet 630.

To explain the theory of operation of the sixth chamber 620, reference is made to Fig. 11(b), which is a plot showing how the magnitude of tangential velocity varies with axial position along the length for the first chamber 120 shown in Fig. 2 (dotted line) and for the sixth chamber 620 shown in Fig. 11(a) (solid line).. For the first chamber 120 which has a static side wall 122 With reference to Fig. 11(b), the tangential velocity $V_\phi$ is plotted at some none zero constant radius along the length of the chamber.

In order to demonstrate the advantages of the rotating chamber, a long chamber is illustrated in Fig. 11 (b). For the first chamber 120, which has a fixed side wall 122, the tangential gas velocity decays away exponentially, and for a sufficiently long chamber the tangential gas velocity would decay away to zero. However, for the sixth chamber 620, which has a rotatable side wall portion 622a, the tangential gas velocity may be maintained at a substantially constant value throughout the length of the chamber. Thus the introduction of a rotating chamber allows for extending chamber length, without having to increase the inlet pressure or gas consumption.

In other words, for a given gas inlet pressure, the rotating chamber provides gas with $V_\phi$ higher than the stationary case at all radii and throughout the length of the chamber. By the introduction of turbine blades at the position of the outflowing gas, the gas flow has causes the rotatable side wall portion 622a to rotate, which in turn has increased the tangential speed of the gas flow in the rotating portion of the chamber.

The above description of the sixth chamber 620 can be considered as relating to "free rotation" embodiments of the sixth chamber 620. In other embodiments of the sixth chamber 620, the side wall portion 622a of the chamber may be rotated with the assistance of an external energy source. In other words, the side wall 622 or a portion 622a of the side wall 622 may be subjected to forced rotation. In this "forced" case a rotating wall portion may have an external driven means such an electrical motor of some other external driving means. The consequence is that $V_\phi$ of the gas may be increased without increasing pressure at the gas inlet 624 and without increasing gas consumption compared with the first chamber 120, e.g. so as to increase the effectiveness of the gas trap.. From the other point of view, the same virtual cylinder (gas trap) may be achieved at a lower gas inlet pressure and thus lower (preferably considerably lower) gas consumption compared with the first chamber 120. An additional advantage of the sixth ("rotating") chamber 620 is that a desired gas flow structure may be maintained throughout the length of the chamber.

Preferably, in use, the angular rotational speed of the rotatable side wall portion 622a is greater than 0 revs/second and is preferably less than Vsound/2πR, where Vsound is the local speed of sound in the chamber, and R is the internal radius of the chamber.

In any of the above described chambers, the sample inlet may receive a spray or spray plume, containing the sample ions for analysis. The spray may be created from an LC eluent which is typically delivered to the interface of a mass spectrometer in a flexible PEEK tube of ID in the range 0.1 to 0.5 mm. ESI, APCI, or APPI as introduced above, provide such a spray or spray plume, although, as has already been discussed, other methods are applicable to the current invention, for example, electro-flow focusing (A. M. Ganan-Calvo, J.M. Lopez - Herrera and P. Riesco-Chuega. J. Fluid Mech. (2006), vol. 566, pp. 421-445. 2006 Cambridge University Press), thermospray (GB 2207548) may equally be employed for conversion of the liquid flow into a neutral or ionised spray. All these methods typically create a steady liquid micro-jet which issue from menisci held by capillary forces. Such menisci generally take the form of a cusp-like drop attached to the feeding tube in the case of for flow focusing, thermospray and a Taylor cone in the case of electrospray. The issuing micro-jets are forced or 'sucked' from the parent meniscus either by the liquid pressure or electrohydrodynamic forces. Subsequent capillary breakup of the jet leads to a fine spray in all cases.

The gas traps described above may be viewed in terms of balance of forces, e.g. according to V2/r - av ~ dp.

When used in this specification and claims, the terms "comprises" and "comprising", "including", "containing" and variations thereof mean that the specified features, steps or integers are included. The terms are not to be interpreted to exclude the possibility of other features, steps or integers being present.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

For example, whilst the chambers described above have a cylindrical geometry, other geometries, e.g.

toroidal, may also be used.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

All references referred to above are hereby incorporated by reference.

The following numbered paragraphs contain statements of broad combinations of the inventive technical features herein disclosed:

1. An apparatus for providing gaseous sample ions/molecules from liquid droplets containing sample ions/molecules, the apparatus having:

a chamber having one or more walls which define an interior of the chamber, the chamber being configured to receive liquid droplets containing sample ions/molecules;
a gas flow producing means configured to produce a flow of gas within the chamber for promoting evaporation of liquid droplets in the chamber to provide gaseous sample ions/molecules;
wherein the apparatus is configured such that the flow of gas produced within the chamber inhibits liquid droplets in the chamber from coming into contact with the one or more walls of the chamber.

2. An apparatus according to Paragraph 1, wherein the apparatus is configured such that the flow of gas produced within the chamber prevents substantially all of the liquid droplets from coming into contact with the one or more walls of the chamber.

3. An apparatus according to Paragraph 1 or 2, the apparatus is configured such that the flow of gas produced within the chamber has a vortex or swirling structure in at least a region of space within the chamber.

4. An apparatus according to any one of the previous Paragraphs, wherein the apparatus is configured such that the flow of gas produced within the chamber establishes a pressure gradient within the chamber, the pressure gradient established by the flow of gas including a first region of space within the chamber that has a higher pressure than a second region of space within the chamber, wherein the first region of space surrounds the second region of space in at least one dimension and the second region of space is spaced apart from the one or more walls of the chamber.

5. An apparatus according to any one of the previous Paragraphs wherein the flow of gas within the chamber has an inner region and an outer region in which the flow of gas has an axial velocity in a forward direction, as well as an intermediate region, between the inner region and outer region, in which the flow of gas has an axial velocity in a reverse direction that is opposite to the forward direction.

6. An apparatus according to any one of the previous Paragraphs, wherein the apparatus evaporates substantially all the liquid droplets received by the chamber.

7. An apparatus according to any one of the previous Paragraphs, wherein the apparatus is configured such that the flow of gas is such that the average residence time of a liquid droplet in the chamber is 1 millisecond or more.

8. An apparatus according to any one of the previous Paragraphs, wherein the chamber includes a sample outlet and the apparatus includes one or more electrodes configured to produce an electric field within the chamber to direct gaseous sample ions towards the sample outlet so that the gaseous sample ions exit the chamber via the sample outlet.

9. An apparatus according to Paragraph 8, wherein the electrodes are configured so that the electric field is substantially orthogonal to the flow of gas in at least a region of space within the chamber.

10. An apparatus according to any one of the previous Paragraphs, wherein the one or more walls of the chamber which define the interior of the chamber include a wall selected from a cylindrical wall, a toroidal wall, a conical wall, a spiral wall, or a helical wall.

11. An apparatus according to any one of the previous Paragraphs, wherein at least a portion of a wall of the chamber is configured to rotate about an axis of the chamber.

12. An apparatus according to Paragraph 11, wherein the at least a portion of a wall is configured to rotate around an axis of the chamber as a consequence of the gas flowing out from the chamber.

13. An apparatus according to Paragraph 11 or 12, wherein the at least a portion of a wall is configured to rotate around an axis of the chamber with the assistance of an external energy source.

14. An apparatus according to any one of the previous Paragraphs, wherein the apparatus includes an energy input device configured to promote evaporation of the liquid droplets by supplying energy to the liquid droplets.

15. An apparatus according to Paragraph 14, wherein the energy input device includes one or more devices selected from:

a heating device for heating gas which passes into the chamber via the gas inlet;
a heating device for heating the chamber;
a source of microwaves for supplying microwaves to the chamber; and/or
an acoustic device for supplying acoustic vibrations to the chamber.

16. An apparatus according to any one of the previous Paragraphs, wherein the apparatus is configured so that a region of space within the chamber has a turbulent viscosity ratio of 100 or more.

17. An apparatus according to any one of the previous Paragraphs, wherein the apparatus is configured to regulate the flow of gas within the chamber in response to one or more sensors located at an outlet of the chamber.

18. An apparatus according to any one of the previous Paragraphs, wherein the apparatus includes a source of liquid droplets configured to produce liquid droplets containing sample ions/molecules to be received by the chamber.

19. An apparatus according to Paragraph 18, wherein the source of liquid droplets includes any one of the following:

an electrospray ionisation source;
an atmospheric pressure chemical ionisation source;
an atmospheric pressure photoionisation source;
a desorption electrospray ionisation source;
an atmospheric pressure matrix-assisted laser desorption/ionisation source;
a thermospray ionisation source;
a source configured to use electro-flow focussing.

20. An apparatus according to any one of the previous Paragraphs, wherein the apparatus includes at least one additional chamber configured to receive gaseous sample ions/molecules from the chamber via a sample outlet in the chamber, the additional chamber being configured to have a pressure that is lower than that of the chamber.

21. An apparatus according to any one of the previous Paragraphs, wherein the apparatus is included in a mass spectrometer which also has a mass analyser configured to analyse gaseous sample ions from the chamber.

22. An apparatus according to Paragraph 21, wherein the mass analyser includes any one of the following:

a quadrupole mass filter;
a triple quadrupole mass spectrometer;
an ion cyclotron resonance mass analyser;
a time of flight mass analyser;
one or more RF ions traps;
one or more electrostatic ion traps;
hybrid variants of the above.

23. An apparatus for providing gaseous sample ions/molecules from liquid droplets containing sample ions/molecules, the apparatus having:

a chamber having one or more walls which define an interior of the chamber, the chamber being configured to receive liquid droplets containing sample ions/molecules;
wherein the apparatus is configured such that a flow of gas produced within the chamber inhibits liquid droplets in the chamber from coming into contact with the one or more walls of the chamber.

24. A method of providing gaseous sample ions/molecules from liquid droplets containing sample ions/molecules, the method including:

receiving liquid droplets containing sample ions/molecules in a chamber having one or more walls which define an interior of the chamber;
producing a flow of gas within the chamber for promoting evaporation of liquid droplets in the chamber to provide gaseous sample ions/molecules;
wherein the flow of gas produced within the chamber inhibits liquid droplets in the chamber from coming into contact with the one or more walls of the chamber.

25. An apparatus substantially as any one embodiment herein described with reference to and as shown in the accompanying drawings.

26. A method substantially as any one embodiment herein described with reference to and as shown in the accompanying drawings.

**Claims**

1. An apparatus for providing gaseous sample ions/molecules from liquid droplets containing sample ions/molecules, the apparatus having:

a chamber having one or more walls which define an interior of the chamber, the chamber being configured to receive liquid droplets containing sample ions/molecules;
a gas flow producing means configured to produce a flow of gas within the chamber for promoting evaporation of liquid droplets in the chamber to provide gaseous sample ions/molecules;
wherein the apparatus is configured such that the flow of gas produced within the chamber inhibits liquid droplets in the chamber from coming into contact with the one or more walls of the chamber.

2. An apparatus according to claim 1, wherein the apparatus is configured such that the flow of gas produced within the chamber has a vortex or swirling structure in at least a region of space within the chamber.

3. An apparatus according to any one of the previous claims wherein the flow of gas within the chamber has an inner region and an outer region in which the flow of gas has an axial velocity in a forward direction, as well as an intermediate region, between the inner region and outer region, in which the flow of gas has an axial velocity in a reverse direction that is opposite to the forward direction.

4. An apparatus according to any one of the previous claims, wherein the apparatus evaporates substantially all the liquid droplets received by the chamber.

5. An apparatus according to any one of the previous claims, wherein the chamber includes a sample outlet and the apparatus includes one or more electrodes configured to produce an electric field within the chamber to direct gaseous sample ions towards the sample outlet so that the gaseous sample ions exit the chamber via the sample outlet.

6. An apparatus according to claim 5, wherein the electrodes are configured so that the electric field is substantially orthogonal to the flow of gas in at least a region of space within the chamber.

7. An apparatus according to any one of the previous claims, wherein the one or more walls of the chamber which define the interior of the chamber include a wall selected from a cylindrical wall, a toroidal wall, a conical wall, a spiral wall, or a helical wall.

8. An apparatus according to any one of the previous claims, wherein:

   at least a portion of a wall of the chamber is configured to rotate about an axis of the chamber;

   wherein optionally the at least a portion of a wall is configured to rotate around an axis of the chamber as a consequence of the gas flowing out from the chamber

   wherein optionally the at least a portion of a wall is configured to rotate around an axis of the chamber with the assistance of an external energy source.

9. An apparatus according to any one of the previous claims, wherein the apparatus includes an energy input device configured to promote evaporation of the liquid droplets by supplying energy to the liquid droplets.

10. An apparatus according to claim 9, wherein the energy input device includes one or more devices selected from:

    a heating device for heating gas which passes into the chamber via the gas inlet;

    a heating device for heating the chamber;

    a source of microwaves for supplying microwaves to the chamber; and/or

    an acoustic device for supplying acoustic vibrations to the chamber.

11. An apparatus according to any one of the previous claims, wherein the apparatus includes a source of liquid droplets configured to produce liquid droplets containing sample ions/molecules to be received by the chamber.

12. An apparatus according to any one of the previous claims, wherein the apparatus includes at least one additional chamber configured to receive gaseous sample ions/molecules from the chamber via a sample outlet in the chamber, the additional chamber being configured to have a pressure that is lower than that of the chamber.

13. An apparatus according to any one of the previous claims, wherein the apparatus is included in a mass spectrometer which also has a mass analyser configured to analyse gaseous sample ions from the chamber.

14. An apparatus for providing gaseous sample ions/molecules from liquid droplets containing sample ions/molecules, the apparatus having:

    a chamber having one or more walls which define an interior of the chamber, the chamber being configured to receive liquid droplets containing sample ions/molecules;

    wherein the apparatus is configured such that a flow of gas produced within the chamber inhibits liquid droplets in the chamber from coming into contact with the one or more walls of the chamber.

15. A method of providing gaseous sample ions/molecules from liquid droplets containing sample ions/molecules, the method including:

    receiving liquid droplets containing sample ions/molecules in a chamber having one or more walls which define an interior of the chamber;

    producing a flow of gas within the chamber for promoting evaporation of liquid droplets in the chamber to provide gaseous sample ions/molecules;

    wherein the flow of gas produced within the chamber inhibits liquid droplets in the chamber from coming into contact with the one or more walls of the chamber.

Figure 1

Figure 2

Figure 3

120

124

128, 130

122

126

$V_{axial}$

r

R

Figure 4

(a)

1.19e+02
1.13e+02
3.00e+01
2.73e+01
2.46e+01
2.19e+01
1.92e+01
1.65e+01
1.38e+01
1.11e+01
8.42e+00
5.72e+00
3.02e+00
3.22e-01
-2.38e+00
-5.07e+00
-7.77e+00
-1.05e+01
-1.32e+01
-1.59e+01
-1.86e+01
-2.13e+01
-2.40e+01

(b)

Increasing
turbulent
viscosity

Contours of Turbulent Viscosity Ratio

(c)

Increasing
static
pressure

Contours of Static Pressure (pascal)

Figure 5

Figure 6

Figure 7

Figure 8

Figure 9

Figure 10

620

628

624

622b

622a

630

640

Figure 11(a)

Figure 11(b)

Figure 11(c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5965884 A
- US 6700119 B
- US 6207955 B
- US 6177669 B
- US 6818888 B
- US 7595487 B
- US 7145136 B
- GB 2207548 A

**Non-patent literature cited in the description**

- Mass Spectrometry Sampling Under Ambient Conditions with Desorption Electrospray Ionization. *Science,* 2004, vol. 306, 471-473
- Ambient Ionization Mass Spectrometry. *Annual Review of Analytical Chemistry,* July 2010, vol. 3, 43-65
- **M. DOLE ; L. L. MACK ; R. L. HINES ; R. C. MOBLEY ; L. D. FERGUSON ; M. B. ALICE.** *J. Chem. Phys.,* 1968, vol. 49, 2240
- **RANQUE, G.J.** Experiments on expansion in a vortex with simultaneous exhaust of hot air and cold air. *Le Journal de Physique et Le Radium,* 1933, vol. 4 (7), 112-115
- **HILSCH, R.** The use of expansion of gases in a centrifugal field as cooling process. *The Review of Scientific Instruments,* 1947, vol. 18 (2), 108-113
- **A. GUTSOL.** The Ranque effect. *Physics-Uspekhi,* 1997, vol. 40 (6), 639-658
- **L. KHODORKOV ; N.V. POSHERNEV ; M.A. ZHIDKOV.** The vortex tube-a universal device for heating, cooling, cleaning, and drying gases and separating gas mixtures. *Chemical and Petroleum Engineering,* July 2003, vol. 39 (7-8), 409-415
- **A. M. GANAN-CALVO ; J.M. LOPEZ - HERRERA ; P. RIESCO-CHUEGA.** J. Fluid Mech. Cambridge University Press, 2006, vol. 566, 421-445